# EUROPEAN PATENT APPLICATION

(11) **EP 4 709 001 A1**
(43) Date of publication of application: **11.03.2026**
(21) Application number: 24732162.3
(22) Date of filing: 02.05.2024
(51) Int. Cl.: H04W 72/0453, H04L 5/00, H04W 72/543, H04W 72/25, H04W 72/30, H04W 4/40, H04W 92/18

(54) **METHOD AND APPARATUS FOR CONFIGURING CARRIER FOR TRANSMITTING MESSAGE RELATED TO ESTABLISHMENT OF UNICAST LINK OF MULTI-CARRIER SUPPORTING TERMINAL**

(30) Priority: 02.05.2023 US 202363463556 P; 03.05.2023 US 202363463882 P; 04.05.2023 KR 20230058760; 11.05.2023 KR 20230061341
(71) Applicant: LG Electronics Inc., Yeongdeungpo-gu Seoul 07336 (KR)
(72) Inventor: PARK, Giwon, Seoul 06772 (KR); KIM, Laeyoung, Seoul 06772 (KR); LEE, Seungmin, Seoul 06772 (KR); BACK, Seoyoung, Seoul 06772 (KR)
(74) Representative: Maikowski & Ninnemann Patentanwälte Partnerschaft mbB
(86) International application number: PCT/KR2024/005906
(87) International publication number: WO 2024/228543

(57) **Abstract**

Provided are a method for performing wireless communication by a first device, and an apparatus for supporting same. The method may comprise: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

In one embodiment, provided is a non-transitory computer-readable storage medium recording instructions. For example, the instructions, based on being executed, cause a first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a carrier configuration method for transmitting a PC5-S message of a UE supporting multi-carrier, based on an embodiment of the present disclosure.
FIG. 10 shows a carrier configuration method for transmitting a PC5-S message of a UE supporting multi-carrier, based on an embodiment of the present disclosure.
FIG. 11 shows a carrier configuration method for transmitting a PC5 control message of a UE supporting multi-carrier, based on an embodiment of the present disclosure.
FIG. 12 shows a carrier configuration method for transmitting a PC5 control message of a UE supporting multi-carrier, based on an embodiment of the present disclosure.
FIG. 13 shows a method for performing wireless communication by a first device, based on an embodiment of the present disclosure.
FIG. 14 shows a method for performing wireless communication by a second device, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### DETAILED DESCRIPTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

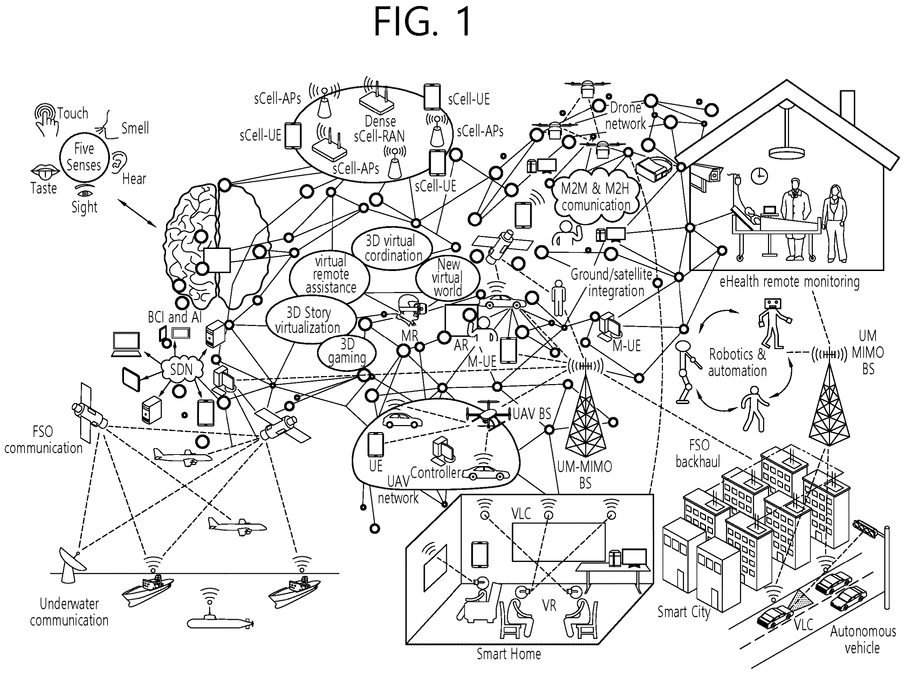

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

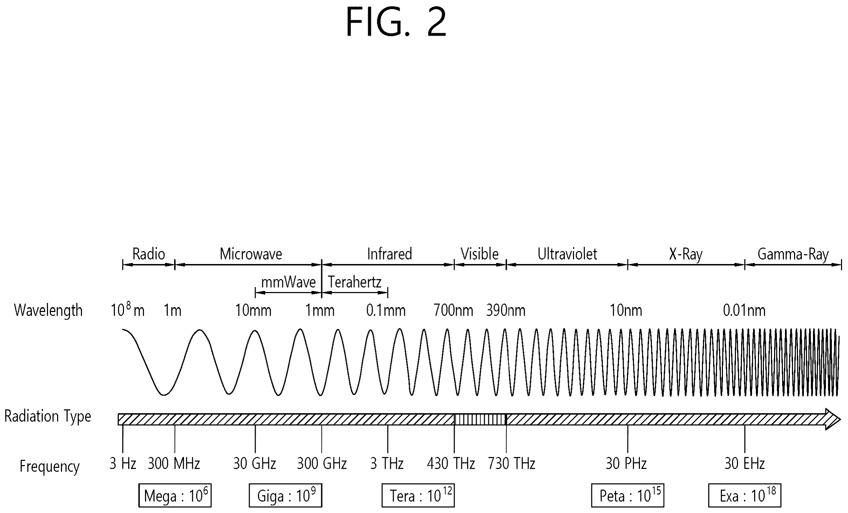

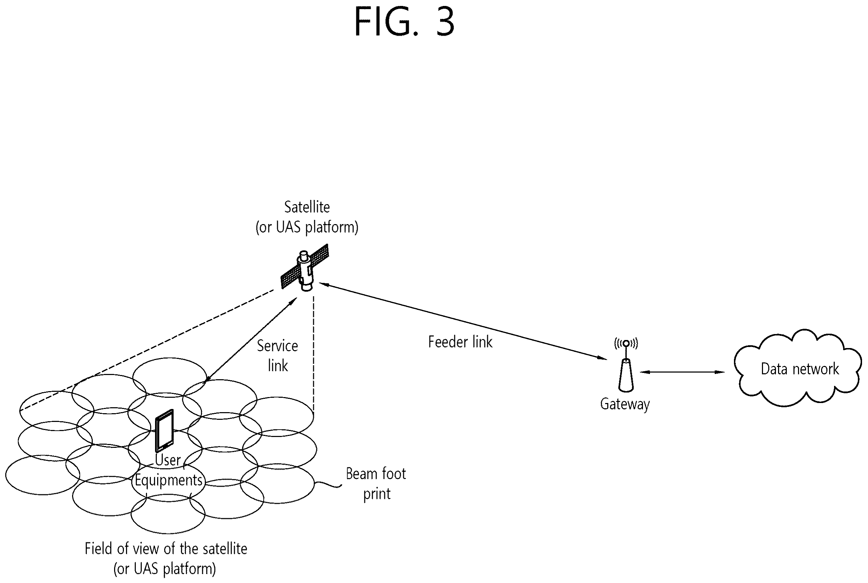

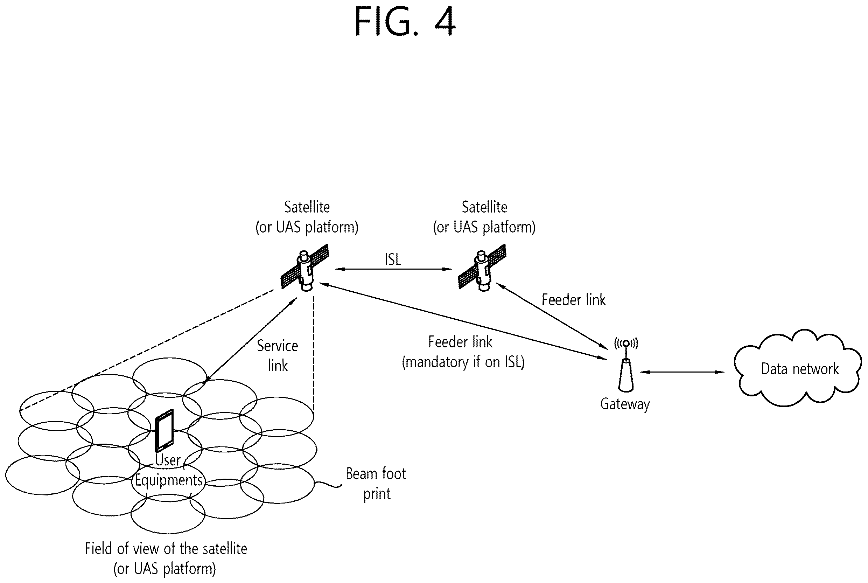

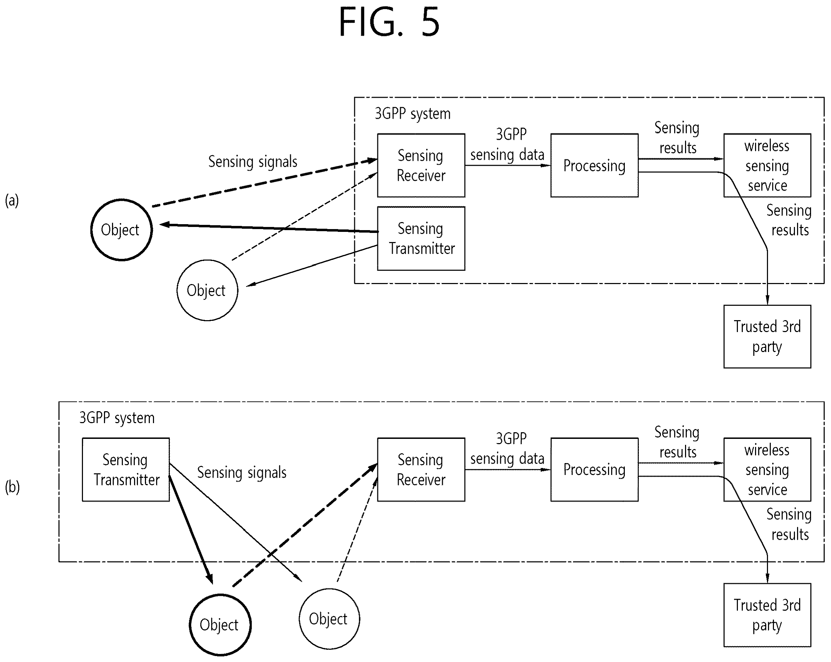

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

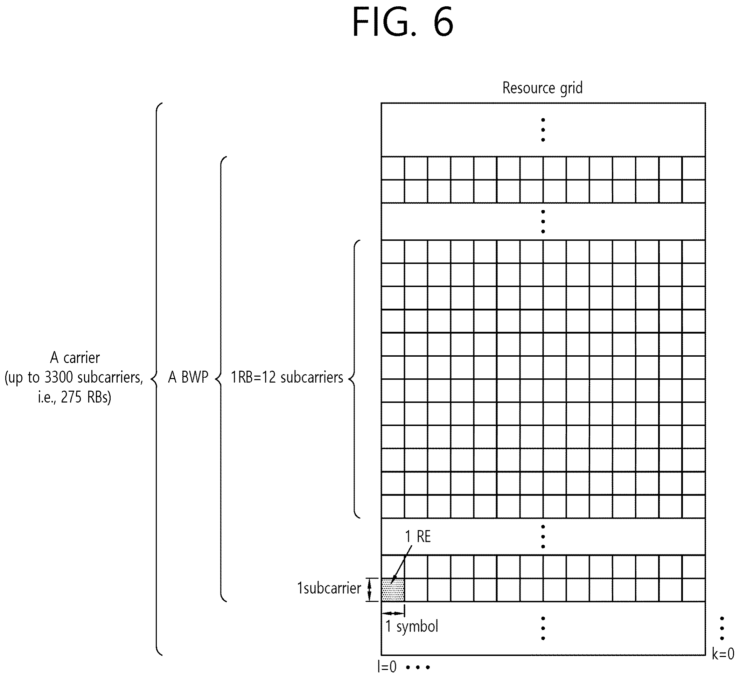

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

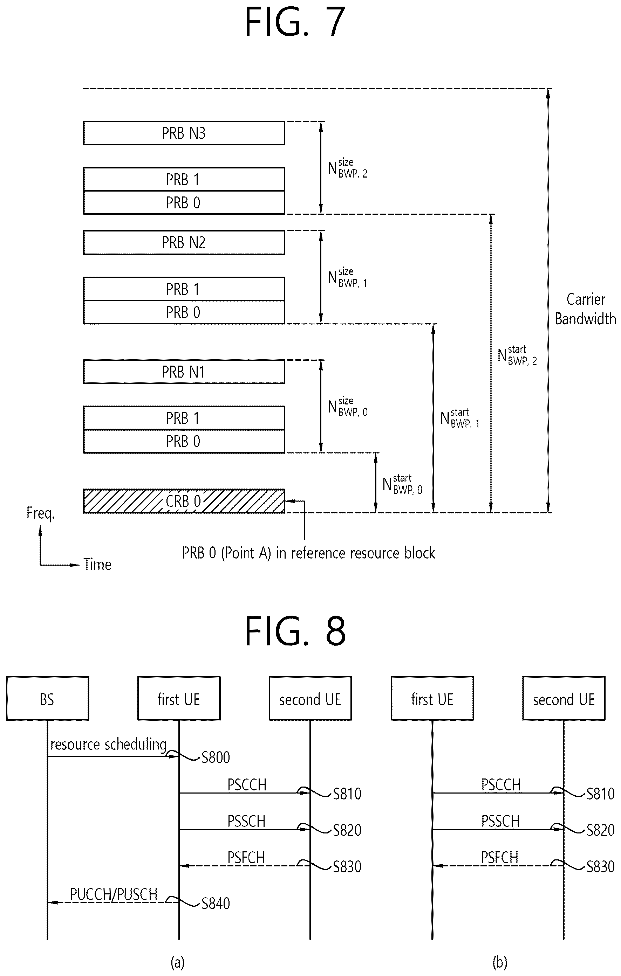

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in conventional LTE V2X, the UE that supports multi-channel operation (e.g., multi-carrier operation or carrier aggregation (CA)) may select specific carrier for transmitting sidelink data, and may transmit sidelink data through the selected resource and the selected carrier by selecting a resource available in the selected carrier.

Meanwhile, according to the prior art, the UE performing multi-carrier-based communication may determine/select a carrier to be used for transmission of control information or a carrier to be used for transmission of data among a plurality of carriers. Meanwhile, the control plane data (or control information) may be transmitted through the signaling radio bearer (SRB) and the user plane data (or data packet) may be transmitted through the data radio bearer (DRB). And, the data (or data packet) may be transmitted through the DRB mapped to the quality of service (QoS) flow configured based on priority or latency related to the data (or data packet). For example, when the QoS flow #1 and the QoS flow #2 are mapped to the DRB #1 and the plurality of carriers available for transmission through the DRB #1 are configured and the QoS flow related to the data (or data packet) is the QoS flow #1, the data (or data packet) may be transmitted through the DRB #1 based on at least one carrier selected among the plurality of carriers which are configured to the DRB #1 mapped to the QoS flow #1. However, unlike the above, since the control information does not have a QoS profile, a mapping relationship based on the QoS flow, etc. cannot be configured in the control information. That is, the QoS profile-based carrier determination/selection method described above cannot be applied when determining/selecting a carrier for transmission of the control information. In this case, the following problems may occur. For example, if a carrier for the PC5 control message (e.g., PC5-S message or PC5-RRC message) transmitted and received for establishment (or maintenance) of the unicast link is not configured, the PC5 control message (e.g., PC5-S message or PC5-RRC message) may not be transmitted and received, or delay may occur in transmission and reception of PC5 control message (e.g., PC5-S message or PC5-RRC message), which may deteriorate the quality of unicast service related to the unicast link. Or, for example, since the UE may need to perform additional operations such as transmitting carrier request information to the counterpart UE or the base station to receive information related to a carrier used for transmission and reception of PC5 control message (e.g., PC5-S message or PC5-RRC message) related to the establishment of unicast link, the overhead of the UE may be increased.

In the present disclosure, a method for operating sidelink carrier configuration of a UE supporting multi-carrier and a device supporting the same are proposed as follows.

For example, the higher layer (e.g., vehicle-to-everything (V2X) layer or PC5 layer) of the UE supporting multi-carrier operation may transfer carrier information that can be used to transmit specific unicast (configuration) message (e.g., direct communication request (DCR) message, direct communication accept (DCA) message, PC5-S exchanged for security configuration in the PC5 unicast connection configuration step, PC5 RRC message for exchanging capability information between UEs (e.g., UECapabilityEnquirySidelink, ue-CapabilityInformationSidelink) or PC5 RRC message exchanged for PC5 RRC reconfiguration procedure for configuring sidelink (SL) data radio bearer (DRB) between UEs (e.g., RRCReconfigurationSidelink, RRCReconfigurationFailureSidelink, RRCReconfigurationCompleteSidelink)) to the lower layer (e.g., access stratum (AS) layer). For example, the higher layer (e.g., V2X layer or PC5 layer) of the UE may transfer carrier information that can be used to the lower layer (e.g., AS layer) together when performing transmission of specific PC5-S unicast configuration message (e.g., direct communication request (DCR) message, direct communication accept (DCA) message or PC5-S exchanged for security configuration in the PC5 unicast connection configuration step). For example, the lower layer of the UE may perform transmission of the corresponding specific PC5-S unicast message (e.g., direct communication request (DCR) message, direct communication accept (DCA) message or PC5-S exchanged for security configuration in the PC5 unicast connection configuration step) by using the carrier (e.g., carrier information received together when receiving the higher layer data for specific PC5-S unicast configuration message) received from the higher layer. In addition, for example, the UE supporting multi-carrier operation may receive carrier information that can be used for transmission of specific unicast message (e.g., direct communication request (DCR) message, direct communication accept (DCA) message, PC5-S exchanged for security configuration in the PC5 unicast connection configuration step, PC5 RRC message for exchanging capability information between UEs (e.g., UECapabilityEnquirySidelink, ue-CapabilityInformationSidelink) or PC5 RRC message exchanged for PC5 RRC reconfiguration procedure for configuring sidelink (SL) data radio bearer (DRB) between UEs (e.g., RRCReconfigurationSidelink, RRCReconfigurationFailureSidelink, RRCReconfigurationCompleteSidelink)) from the base station.

In addition, for example, the higher layer (e.g., V2X layer, PC5 layer) of UE supporting multi-carrier operation may transfer carrier information that can be used to transmit signaling for the following purposes to the lower layer (e.g., AS layer). Or, for example, the base station may transfer to the UE by configuring carrier information that can be used to transmit signaling for the following purposes.

For example, carrier information that can be used to transmit (and/or receive) messages from transmitting an initial message (e.g., direct communication request (DCR) message) for unicast configuration to transmitting (and/or receiving) a PC5 RRC message (e.g., PC5 RRC message for exchanging capability information between UEs (e.g., UECapabilityEnquirySidelink, ue-CapabilityInformationSidelink) or PC5 RRC message exchanged for PC5 RRC reconfiguration procedure for configuring sidelink (SL) data radio bearer (DRB) between UEs (e.g., RRCReconfigurationSidelink, RRCReconfigurationFailureSidelink, RRCReconfigurationCompleteSidelink)) may be transferred. In addition, for example, the sidelink carrier candidate/combination information to be used after the PC5 RRC reconfiguration procedure is completed through the PC5 RRC message exchange may be reconfigured through the PC5 RRC reconfiguration procedure. In this case, for example, the lower layer (e.g., AS layer) of the UE may report the sidelink carrier candidate/combination information to be used after the PC5 RRC reconfiguration procedure is completed to the higher layer (e.g., V2X layer or PC5 layer).

In addition, for example, the sidelink carrier to be used for transmission and/or reception of signaling (e.g., PC5-S message, PC5 RRC message, MAC CE) for which no mapping (and/or L2 ID mapping) relationship related to QoS flow identifier (QFI) or PC5 QoS flow identifier (PFI) (or PQFI) or PC5 5QI (PQI) or QoS profile has been configured may be configured as follows.

For example, the base station or the UE may determine and configure a plurality of carriers linked with unicast-related service as a carrier to be used for transmission and/or reception of signaling (e.g., PC5-S message, PC5 RRC message, MAC CE) for which no mapping (and/or L2 ID mapping) relationship related to QoS flow identifier (QFI) or PC5 QoS flow identifier (PFI) (or PQFI) or PC5 5QI (PQI) or QoS profile has been configured and may transmit it to the UE (or the counterpart UE).

For example, a default sidelink carrier to be used for transmission and/or reception of signaling (e.g., PC5-S message, PC5 RRC message, MAC CE) for which no mapping (and/or L2 ID mapping) relationship related to QoS flow identifier (QFI) or PC5 QoS flow identifier (PFI) (or PQFI) or PC5 5QI (PQI) or QoS profile has been configured or not related to the QoS profile may be configured or pre-configured from the base station (in advance).

For example, the higher layer (e.g., V2X layer or PC5 layer) of the UE may configure the plurality of carriers linked with unicast-related service as a carrier to be used for transmission and/or reception of signaling (e.g., PC5-S message, PC5-RRC message or MAC CE) for which no mapping (and/or L2 ID mapping) relationship related to QoS flow identifier (QFI) or PC5 QoS flow identifier (PFI) (or PQFI) or PC5 5QI (PQI) or QoS profile has been configured and may transfer it to the lower layer (e.g., AS layer) of the UE.

For example, the UE may perform the unicast sidelink communication by using a sidelink carrier linked with a pair of source layer-2 ID and destination layer-2 ID after establishing the unicast connection configuration (e.g., PC5 unicast link or PC5 RRC connection). Or, for example, the UE may perform the unicast sidelink communication by using a sidelink carrier linked with a destination layer-2 ID after establishing the unicast connection configuration (e.g., PC5 unicast link or PC5 RRC connection). Or, for example, the UE may perform the unicast sidelink communication by using a sidelink carrier linked with QoS flow identifier (QFI) or PC5 QoS flow identifier (PFI) (or PQFI) or PC5 5QI (PQI) or QoS profile after establishing the unicast connection configuration (e.g., PC5 unicast link or PC5 RRC connection). Or, for example, the UE may perform the unicast sidelink communication by using a sidelink carrier linked with a combination of the pair of source layer-2 ID and destination layer-2 ID and QoS flow identifier (QFI) or PC5 QoS flow identifier (PFI) (or PQFI) or PC5 5QI (PQI) or QoS profile after establishing the unicast connection configuration (e.g., PC5 unicast link or PC5 RRC connection). Or, for example, the UE may perform the unicast sidelink communication by using a sidelink carrier linked with a combination of destination layer-2 ID and QoS flow identifier (QFI) or PC5 QoS flow identifier (PFI) (or PQFI) or PC5 5QI (PQI) or QoS profile after establishing the unicast connection configuration (e.g., PC5 unicast link or PC5 RRC connection).

For example, in case of unicast communication, when selecting sidelink carrier for the interested transmission (and/or reception) service of the UE own, the transmitting UE (and/or receiving UE) may select sidelink carrier mapped to QoS flow identifier (QFI) or PC5 QoS flow identifier (PFI) (or PQFI) or PC5 5QI (PQI) or QoS profile related to the interested transmission (and/or reception) service of the UE own by using sidelink carrier mapping relationship per QoS flow identifier (QFI) or per PC5 QoS flow identifier (PFI) (or PQFI) or per PC5 5QI (PQI) or per QoS profile.

For example, in case of groupcast/broadcast communication, when selecting sidelink carrier for the interested reception service of the UE own, the receiving UE may select sidelink carrier mapped to destination layer-2 ID related to the interested reception service of the UE own by using sidelink carrier mapping relationship per destination layer-2 ID. Or, for example, in case of groupcast/broadcast communication, when selecting sidelink carrier for the interested reception service of the UE own, the receiving UE may select sidelink carrier mapped to a combination of destination layer-2 ID related to the interested reception service of the UE own and QoS flow identifier (QFI) or PC5 QoS flow identifier (PFI) (or PQFI) or PC5 5QI (PQI) or QoS profile by using sidelink carrier mapping relationship per combination of destination layer-2 ID and QoS flow identifier (QFI) or PC5 QoS flow identifier (PFI) (or PQFI) or PC5 5QI (PQI) or QoS profile. And, for example, in case of groupcast/broadcast communication, when selecting sidelink carrier for the interested transmission service of the UE own, the transmitting UE may select sidelink carrier mapped to QoS flow identifier (QFI) or PC5 QoS flow identifier (PFI) (or PQFI) or PC5 5QI (PQI) or QoS profile which are related to the interested transmission service of the UE own by using sidelink carrier mapping relationship per QoS flow identifier (QFI) or per PC5 QoS flow identifier (PFI) (or PQFI) or per PC5 5QI (PQI) or per QoS profile which are related to the service. Or, for example, in case of groupcast/broadcast communication, when selecting sidelink carrier for the interested transmission service of the UE own, the transmitting UE may select sidelink carrier mapped to a combination of destination layer-2 ID and QoS flow identifier (QFI) or PC5 QoS flow identifier (PFI) (or PQFI) or PC5 5QI (PQI) or QoS profile which are related to the interested transmission service of the UE own by using sidelink carrier mapping relationship per combination of destination layer-2 ID and QoS flow identifier (QFI) or PC5 QoS flow identifier (PFI) (or PQFI) or PC5 5QI (PQI) or QoS profile which are related to the service. Or, for example, in case of groupcast/broadcast communication, when selecting sidelink carrier for the interested transmission service of the UE own, the transmitting UE may select sidelink carrier mapped to destination layer-2 ID which is related to the interested transmission service of the UE own by using sidelink carrier mapping relationship per destination layer-2 ID which is related to the service.

For example, the higher layer (e.g., V2X layer or PC5 layer) of the UE may manage multi-carrier unicast communication operation by providing a carrier to be used for unicast communication of the UE. In this case, for example, the carrier provided by the higher layer of the UE may be provided to be mapped as "service to carrier". Or, for example, the carrier provided by the higher layer of the UE may be provided to be mapped as "PC5 QoS flow identifier (PFI) (or PQFI) or PC5 5QI (PQI) or QoS flow identifier (QFI) or QoS profile of the service to carrier".

In addition, for example, in unicast communication, the higher layer (e.g., V2X layer) of the UE may transfer the carrier information mapped to the unicast service related to the unicast establishment to the lower layer (e.g., AS layer) of the UE. For example, the lower layer of the UE may perform PC5-S message transmission and reception operation for unicast establishment by selecting carrier mapped to the interested unicast V2X service of the UE (e.g., sidelink carrier information mapped to unicast V2X service transferred from the higher layer to the lower layer) based on the unicast carrier information received from the higher layer.

For example, in the process of establishing layer-2 link (or PC5 unicast link), when transferring the PC5-S message (e.g., direct communication request (DCR), etc.) to the AS layer, the V2X layer may also provide radio frequencies mapped to the V2X service type (e.g., after configuring unicast link, unicast service type information to be used for the configured unicast link) for layer-2 link establishment (or PC5 unicast link). For example, the radio frequencies may be determined based on the configuration described in clause 5.1.2.1.

In addition, for example, in the case of Rx UE that want to receive PC5-S message (e.g., DCR message, etc.) for unicast link establishment, it may perform the reception (or monitoring) operation of the PC5-S message (e.g., DCR message, etc.) by selecting carrier(s) mapped to the interested unicast V2X service(s). For example, in the case of Rx UE, the information of carrier(s) mapped to the interested V2X service(s) may be pre-configured or provided to the UE (in advance) or may be configured form the base station. Or, for example, the higher layer (e.g., AS layer or PC5 layer) of Rx UE may transfer information of carrier(s) mapped to the interested unicast V2X service(s) to the lower layer (e.g., AS layer) of the UE. For example, the lower layer of the UE may perform sidelink communication (e.g., transmission or reception) by selecting sidelink carrier matched to the interested unicast V2X service of the UE own based on the information of carrier(s) mapped to the unicast V2X service(s) transferred from the higher layer.

In addition, for example, the UE (e.g., transmitting UE or receiving UE) may select and use some or all of the carrier(s) agreed upon (e.g., for the corresponding PC5 unicast link) through the PC5-RRC signaling (e.g., PC5 RRC message exchanged for PC5 RRC reconfiguration procedure) as a sidelink carrier to be used for transmission and/or reception of signaling (e.g., PC5-S message, PC5 RRC message or MAC CE) for which QoS flow identifier (QFI) or PC5 QoS flow identifier (PFI) (or PQFI) or PC5 5QI (PQI) or QoS profile mapping (and/or L2 ID mapping) relationship is not configured or not related to the QoS profile.

An embodiment of the present disclosure may be applied and expanded to all of the RRC CONNECTED status or RRC INACTIVE status or RRC IDLE status or out-of-coverage status with the base station of the UE.

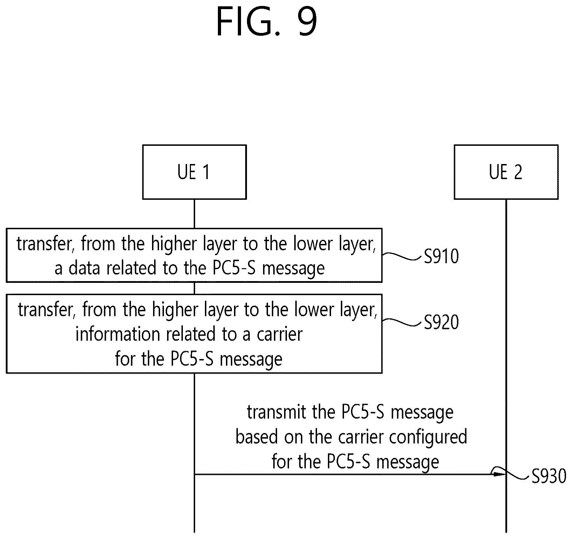

FIG. 9 shows a carrier configuration method for transmitting a PC5-S message of a UE supporting multi-carrier, based on an embodiment of the present disclosure. The embodiment of FIG. 9 may be combined with various embodiments of the present disclosure.

Referring to FIG. 9, the UE 1 may be a device capable of performing unicast communication with the UE 2. And, for example, the UE 1 may transmit message (e.g., PC5-S message) including control information related to establishment of unicast link to perform the unicast-based communication with the UE 2 in the following methods. In step S910, the higher layer (e.g., V2X layer) of the UE 1 may transfer data related to the PC5-S message (e.g., DCR message) that must be initially transmitted for establishment of unicast link with the UE 2 to the lower layer (e.g., AS layer) of the UE 1. In step S920, the higher layer (e.g., V2X layer) of the UE 1 may transfer information related to a carrier that can be used for transmission of PC5-S message (e.g., DCR message) described above to the lower layer (e.g., AS layer) of the UE 1. For example, the information related to the carrier that can be used for transmission of PC5-S message may be transferred from the higher layer (e.g., V2X layer) of the UE 1 to the lower layer (e.g., AS layer) of the UE 1 along with the data related to the PC5-S message of step S910 described above. Or, for example, the higher layer of the UE 1 may transfer not only the carrier that can be used for transmission of PC5-S message (e.g., DCR message) described above, but also information related to a carrier that can be used for transmission of control information (or signaling) (e.g., PC5 RRC message, etc.) for which no mapping relationship related to QoS profile (or QFI, or PFI, or PQI) has been configured such as PC5-S message to the lower layer of the UE 1. In step S930, the lower layer of the UE 1 may perform transmission of the PC5-S message including the data related to the PC5-S message received in step S910 described above to the UE 2, based on the carrier received in step S920 which is configured for the PC5-S message. And, for example, the UE 1 may establish the unicast link with the UE based on the transmission of the PC5-S message. Because of this, the quality of the unicast service related to the established unicast link can be guaranteed by preventing problem in which the PC5-S message for establishing the unicast link is not transmitted or a delay occurs in transmission.

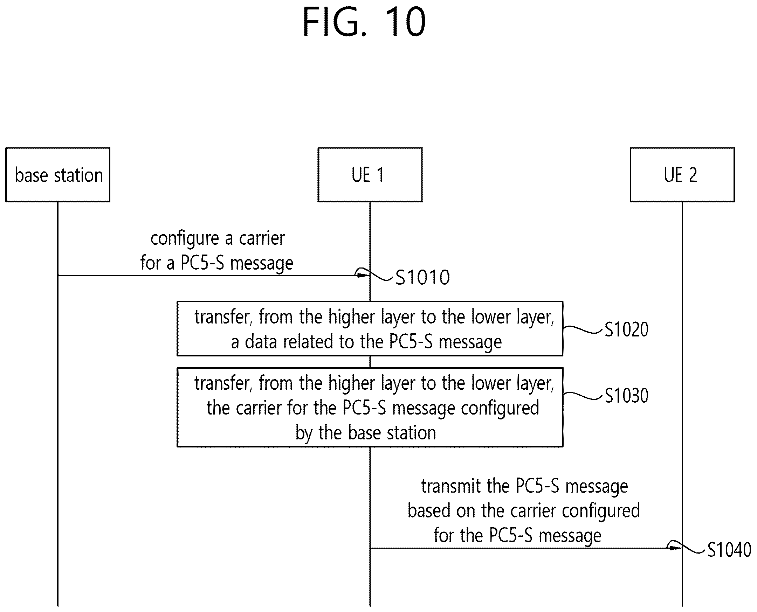

FIG. 10 shows a carrier configuration method for transmitting a PC5-S message of a UE supporting multi-carrier, based on an embodiment of the present disclosure. The embodiment of FIG. 10 may be combined with various embodiments of the present disclosure.

Referring to FIG. 10, the UE1 may be a device capable of performing unicast communication with the UE 2. And, for example, the UE 1 may transmit message (e.g., PC5-S message) including control information related to establishment of unicast link to perform the unicast-based communication with the UE 2 in the following methods. In step S1010, the UE 1 performing multi-carrier-based communication may obtain information related to the plurality of carriers from the base station. For example, information related to a carrier that can be used for transmission of control information related to establishment of unicast link of the UE 1 and the UE 2 may be included in the information obtained from the base station. For example, information related to a carrier that can be used for transmission of PC5-S message, among the information related to the plurality of carriers obtained from the base station, may be included. Or, for example, information related to a carrier that can be used for transmission of control information (or signaling) (e.g., PC5 RRC message) for which no mapping relationship related to QoS profile (or QFI, or PFI, or PQI) has been configured such as the PC5-S message, among the information related to the plurality of carriers obtained from the base station, may be included. In step S1020, the higher layer (e.g., V2X layer) of the UE 1 may transfer data related to the PC5-S message (e.g., DCR message) that must be initially transmitted for establishment of unicast link with the UE 2 to the lower layer (e.g., AS layer) of the UE 1. In step S1030, the higher layer (e.g., V2X layer) of the UE 1 may transfer information related to carrier that can be used for transmission for PC5-S message (e.g., DCR message) described above to the lower layer (e.g., AS layer). For example, the information related to the carrier that can be used for transmission of PC5-S message transferred from the higher layer (e.g., V2X layer) of the UE 1 to the lower layer (e.g., AS layer) of the UE 1 may be information included in the information related to the plurality of carriers obtained by UE 1 from the base station in step S1010 described above. And, for example, the carrier that can be used for transmission of PC5-S message which is indicated by the higher layer (e.g., V2X layer) of the UE 1 to the lower layer (e.g., AS layer) of the UE 1 may be a carrier configured by the base station in step S1010 described above. Or, for example, the higher layer of the UE 1 may transfer not only the carrier that can be used for transmission of PC5-S message (e.g., DCR message) described above, but also information related to a carrier that can be used for transmission of control information (or signaling) (e.g., PC5 RRC message, etc.) for which no mapping relationship related to QoS profile (or QFI, or PFI, or PQI) has been configured such as PC5-S message to the lower layer of the UE 1. In this case, for example, as described above, information related to the carrier that can be used for transmission of control information (or signaling) (e.g., PC5 RRC message, etc.) for which no mapping relationship related to QoS profile (or QFI, or PFI, or PQI) has been configured may be information included in the information related to the plurality of carriers obtained by the UE 1 from the base station, and carrier that can be used for transmission of control information (or signaling) (e.g., PC5 RRC message) for which no mapping related to QoS profile (or QFI, or PFI, or PQI) among the plurality of carriers may be a carrier configured by the base station. Meanwhile, for example, the information related to the carrier that can be used for transmission of the PC5-S message may be transferred from the higher layer (e.g., V2X layer) of the UE 1 to the lower layer (e.g., AS layer) of the UE 1 along with the data related to the PC5-S message in step S1020 described above. In step S1040, the lower layer of the UE 1 may perform transmission of PC5-S message including the data related to the PC5-S message in step S1020 described above to the UE 2, based on the carrier received in step S1030 which is configured for the PC5-S message. And, for example, the UE 1 may establish the unicast link with the UE 2 based on transmission of the PC5-S message. Because of this, the quality of the unicast service related to the established unicast link can be guaranteed by preventing problem in which the PC5-S message for establishing the unicast link is not transmitted or a delay occurs in transmission.

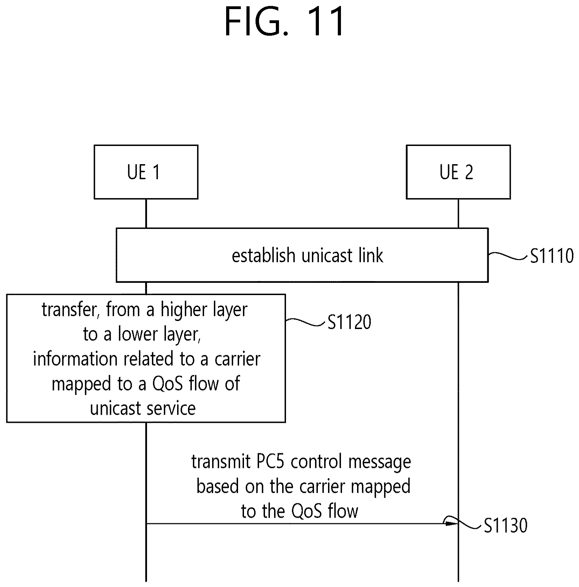

FIG. 11 shows a carrier configuration method for transmitting a PC5 control message of a UE supporting multi-carrier, based on an embodiment of the present disclosure. The embodiment of FIG. 11 may be combined with various embodiments of the present disclosure.

Referring to FIG. 11, in step S1110, the UE 1 may establish unicast link with the UE 2. For example, the UE 1 may establish the unicast link by transmitting PC5 control message including the PC5-S message or PC5-RRC message to the UE 2 based on a legacy carrier. In step S1120, the UE 1 may obtain information related to a carrier mapped to QoS flow of unicast service provided based on the unicast link after establishing the unicast link. For example, information related to the carrier mapped to the QoS flow may be obtained from the base station of UE 1 or may be pre-configured in the UE 1. Meanwhile, the UE 1 may transmit the PC5 control message including the PC5-S message or the PC5-RRC message to the UE 2 even after establishment of a unicast link. In this case, for example, the PC5 control message including the PC5-S message or PC5-RRC message may be transmitted based on a carrier mapped to the QoS flow of the unicast service based on the established unicast link, rather than the legacy carrier of step S1110 described above. That is, for example, the carrier mapped to the QoS flow for data transmitted through the data radio bearer (DRB) may be used as a carrier for the PC5 control message including the PC5-S message or PC5-RRC message transmitted through the signaling radio bearer (SRB). For example, information related to the carrier configured for transmission of the PC5 control message including the PC5-S message or PC5-RRC message may be transferred from the higher layer of the UE 1 to the lower layer of the UE 1. In this case, for example, the higher layer of the UE 1 may be a V2X layer, and the lower layer of the UE 2 may be an AS layer. For example, information related to the carrier mapped to the QoS flow which is configured for transmission of the PC5 control message including the PC5-S message or PC5-RRC message may be transferred from the higher layer of the UE 1 to the lower layer of the UE 1 along with information included in the PC5 control message including the PC5-S message or PC5-RRC message. In step S1130, the UE 1 may transmit the PC5 control message including the PC5-S message or PC5-RRC message to the UE 2 based on the carrier mapped to the QoS flow related to the unicast link. That is, for example, the lower layer of the UE 1 may perform transmission of the PC5 control message including the PC5-S message or PC5-RRC message by using the carrier mapped to the QoS flow received from the higher layer of the UE 1. Because of this, the quality of the unicast service related to the established unicast link can be guaranteed by preventing problem in which the PC5 control message for maintaining the unicast link is not transmitted or a delay occurs in transmission.

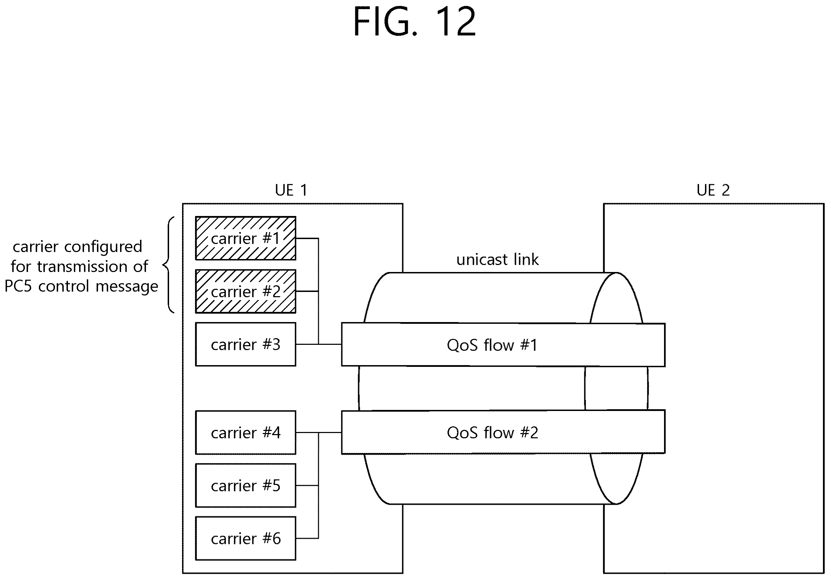

FIG. 12 shows a carrier configuration method for transmitting a PC5 control message of a UE supporting multi-carrier, based on an embodiment of the present disclosure. The embodiment of FIG. 12 may be combined with various embodiments of the present disclosure.

Referring to FIG. 12, UE 1 and UE 2 may establish a unicast link, and the unicast service related to the established unicast link may be mapped to at least one QoS flow (QoS flow #1, QoS flow #2 in FIG. 12). And, for example, at least one carrier may be mapped to the QoS flow related to the unicast link. For example, carrier #1, carrier #2 and carrier #3 may be mapped to the QoS flow #1, and carrier #4, carrier #5 and carrier #6 may be mapped to the QoS flow #2. Meanwhile, generally, a carrier mapped to a QoS flow may be used to transmit data mapped to the corresponding QoS flow. For example, data mapped to the QoS flow may be transmitted through a data radio bearer (DRB) based on the carrier mapped to the QoS flow. Meanwhile, the carrier mapped to the QoS flow may be used as a carrier for transmission of data related to unicast service as well as PC5 control message including PC5-S message or PC5-RRC message. In this case, for example, the PC5 control message including the PC5-S message or the PC5-RRC message may be transmitted through a signaling radio bearer (SRB) based on the carrier mapped to the QoS flow. For example, the carrier #1 and the carrier #2 among the carriers (carrier #1, carrier #2, carrier #3) mapped to the QoS flow #1 related to the established unicast link between the UE 1 and UE 2 may be configured as a carrier to transmit the PC5 control message. In this case, for example, the carrier #1 may be configured as a carrier to transmit the PC5-S message, and the carrier #2 may be configured as a carrier to transmit the PC5-RRC message. For example, information related to the carrier #1 and the carrier #2 mapped to the QoS flow, which are configured to transmit PC5 control message, may be transferred from the higher layer of the UE 1 to the lower layer of the UE 2. For example, the lower layer of the UE 1 may transmit the PC5 control message to the UE 2 by using the carrier (carrier #1 or carrier #2) mapped to the QoS flow received from the higher layer of the UE 1. Because of this, the quality of the unicast service related to the established unicast link can be guaranteed by preventing problem in which the PC5 control message for maintaining the unicast link is not transmitted or a delay occurs in transmission.

The wording of SL multi-carrier exemplified in the present disclosure may be extended and interpreted as SL carrier aggregation (CA). In addition, the wording of SL CA exemplified in the present disclosure may be expanded and interpreted as SL multi-carrier.

The SL resource pool (or SL HARQ entity) exemplified in the present disclosure may be interpreted as an SL resource pool (or SL HARQ entity) for a specific SL carrier.

The CBR threshold value related to the SL carrier/SL BWP/SL HARQ entity exemplified in the present disclosure may be configured per priority or per QoS profile (e.g., packet delay budget (PDB) or reliability) or per SL radio bearer or per logical channel.

The wording of the SL carrier exemplified in the present disclosure may be expanded and interpreted as sidelink BWP or sidelink HARQ entity.

The unicast service exemplified in the present disclosure may be interpreted as a pair of source layer-2 ID and destination layer-2 ID.

The groupcast service exemplified in the present disclosure may be interpreted as a groupcast destination layer-2 ID.

The broadcast service exemplified in the present disclosure may be interpreted as a broadcast destination layer-2 ID.

The "carrier" specified in the present disclosure may be applied as being replaced with "band" or "resource block set of a specific carrier" or "resource pool set of a specific carrier" or "channel".

In embodiments of the present disclosure, direct communication request (DCR) and/or direct communication accept (DCA) message may be interpreted as being replaced by PC5-S DCR and/or PC5-S DCA message, etc.

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, the carrier mapped to QoS flow may be configured as a carrier for transmission of PC5 control message (e.g., PC5-S message or PC5-RRC message) which has no mapping relationship based on the QoS flow. Specifically, when the UE establishes a unicast link with the counterpart UE and transmits a PC5 control message (e.g., PC5-S message or PC5-RRC message) to maintain (or manage) the unicast link, the carrier mapped to the QoS flow of unicast services based on the established unicast links may be used. And, information related to the carrier mapped to the QoS flow configured for transmission of the PC5 control message (e.g., PC5-S message or PC5-RRC message) of the UE may be transferred from the higher layer (e.g., V2X layer) of the UE to the lower layer (e.g., AS layer) of the UE. And, the lower layer (e.g., AS layer) of the UE may transmit the PC5 control message (e.g., PC5-S message or PC5-RRC message) based on the carrier mapped to the QoS flow received from the higher layer (e.g., V2X layer) of the UE. That is, the carrier configured for transmission of the PC5 control message (e.g., PC5-S message or PC5-RRC message) may be determined as the carrier mapped to the QoS flow, and the information related to the carrier configured for transmission of the PC5 control message (e.g., PC5-S message or PC5-RRC message) of the lower layer (e.g., AS layer) of the UE may be indicated by the higher layer (e.g., V2X layer) of the UE. In this case, for example, transmission and reception of the PC5 control message (e.g., PC5-S message or PC5-RRC message) for maintenance (or management) of the established unicast link may be guaranteed. Or, for example, latency that may occur related to maintaining (or managing) a unicast link may be reduced. Or, for example, due to the maintenance (or management) of rapid maintenance (or management) of the unicast link, the quality of unicast service related to the unicast link may be improved. Or, for example, by configuring a carrier for transmission of the PC5 control message (e.g., a PC5-S message or a PC5-RRC message) without a mapping relationship related to the QoS flow as a carrier mapped to the QoS flow, there is no need for the UE to perform additional operations such as requesting a carrier for transmitting control information from the counterpart UE or the base station, thereby reducing the UE's overhead. Or, for example, resources required for transmission of data for the unicast service related to the established unicast link may be efficiently allocated.

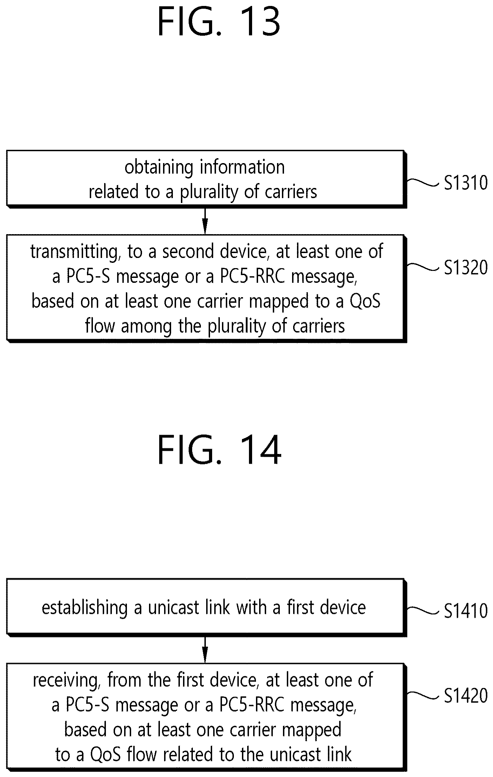

FIG. 13 shows a method for performing wireless communication by a first device, based on an embodiment of the present disclosure. The embodiment of FIG. 13 may be combined with various embodiments of the present disclosure.

Referring to FIG. 13, In step S1310, a first device may obtain information related to a plurality of carriers. In step S1320, the first device may transmit, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

For example, the at least one of the PC5-S message or the PC5-RRC message may be transmitted based on the at least one carrier mapped to the QoS flow after a unicast link is established between the first device and the second device.

For example, the higher layer of the first device may be a vehicle-to-everything (V2X) layer of the first device. For example, the lower layer of the first device may be an access stratum (AS) layer of the first device. For example, the lower layer of the first device may be at least one of a radio resource control (RRC) layer of the first device or a medium access control (MAC) layer of the first device included in the AS layer of the first device.

For example, the QoS flow may be related to a unicast service based on a unicast link established between the first device and the second device. For example, the at least one carrier mapped to the QoS flow for transmission of the at least one of the PC5-S message or the PC5-RRC message may be determined among the plurality of carriers mapped to the QoS flow related to the unicast service.

For example, the information related to the at least one carrier mapped to the QoS flow for transmission of the at least one of the PC5-S message or the PC5-RRC message may be transferred, along with information included in the at least one of the PC5-S message or the PC5-RRC message, from the higher layer of the first device to the lower layer of the first device.

For example, the at least one carrier mapped to the QoS flow may be determined among the plurality of carriers, based on the at least one of the PC5-S message or the PC5-RRC message not being mapped to the QoS flow.

For example, a carrier for transmission of signaling including the at least one of the PC5-S message or the PC5-RRC message not being mapped to the QoS flow among the plurality of carriers may be configured by a base station.

For example, a carrier for transmission of signaling including the at least one of the PC5-S message or the PC5-RRC message not being mapped to the QoS flow among the plurality of carriers may be pre-configured in the first device.

For example, the at least one of the PC5-S message or the PC5-RRC message may be transmitted based on the at least one carrier mapped to the QoS flow, through a signaling radio bearer (SRB).

For example, the PC5-S message may include at least one of (i) a direct communication request (DCR) message, (ii) a direct communication accept (DCA) message or (iii) a message related to a security configuration of a unicast link established between the first device and the second device.

For example, PC5-RRC message may include at least one of (i) a message including information related to a reconfiguration of a PC5-RRC connection or (ii) a message including information related to a capacity of the first device.

The proposed method may be applied to devices according to various embodiments of the present disclosure. First, a processor 102 of a first device 100 may control a transceiver 106 to obtain information related to a plurality of carriers. And, the processor 102 of the first device 100 may control the transceiver 106 to transmit, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

According to one embodiment of the present disclosure, provided is a non-transitory computer-readable storage medium recording instructions. For example, the instructions, based on being executed, cause a first device to perform operations comprising: obtaining information related to a plurality of carriers; and transmitting, to a second device, at least one of a PC5-S message or a PC5-radio resource control (RRC) message, based on at least one carrier mapped to a quality of service (QoS) flow among the plurality of carriers. For example, information related to the at least one carrier mapped to the QoS flow may be transferred from a higher layer of the first device to a lower layer of the first device.

FIG. 14 shows a method for performing wireless communication by a second device, based on an embodiment of the present disclosure. The embodiment of FIG. 14 may be combined with various embodiments of the present disclosure.

Referring to FIG. 14, In step S1410, a second device may establish a unicast link with a first device. In step S 1420, the second device may receive, from the first device, at least one of a PC5-S message or a PC5-radio resource control (RRC) message, based on at least one carrier mapped to a quality of service (QoS) flow related to the unicast link. For example, information related to the at least one carrier mapped to the QoS flow related to the unicast link may be transferred from a higher layer of the first device to a lower layer of the first device.

The proposed method may be applied to devices according to various embodiments of the present disclosure. First, a processor 202 of a second device 200 may control a transceiver 206 to establish a unicast link with a first device. And, the processor 202 of the second device 200 may control the transceiver 206 to receive, from the first device, at least one of a PC5-S message or a PC5-radio resource control (RRC) message, based on at least one carrier mapped to a quality of service (QoS) flow related to the unicast link. For example, information related to the at least one carrier mapped to the QoS flow related to the unicast link may be transferred from a higher layer of the first device to a lower layer of the first device.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: establishing a unicast link with a first device; and receiving, from the first device, at least one of a PC5-S message or a PC5-radio resource control (RRC) message, based on at least one carrier mapped to a quality of service (QoS) flow related to the unicast link. For example, information related to the at least one carrier mapped to the QoS flow related to the unicast link may be transferred from a higher layer of the first device to a lower layer of the first device.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: establishing a unicast link with a first device; and receiving, from the first device, at least one of a PC5-S message or a PC5-radio resource control (RRC) message, based on at least one carrier mapped to a quality of service (QoS) flow related to the unicast link. For example, information related to the at least one carrier mapped to the QoS flow related to the unicast link may be transferred from a higher layer of the first device to a lower layer of the first device.

According to one embodiment of the present disclosure, provided is a non-transitory computer-readable storage medium recording instructions. For example, the instructions, based on being executed, cause a second device to perform operations comprising: establishing a unicast link with a first device; and receiving, from the first device, at least one of a PC5-S message or a PC5-radio resource control (RRC) message, based on at least one carrier mapped to a quality of service (QoS) flow related to the unicast link. For example, information related to the at least one carrier mapped to the QoS flow related to the unicast link may be transferred from a higher layer of the first device to a lower layer of the first device.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

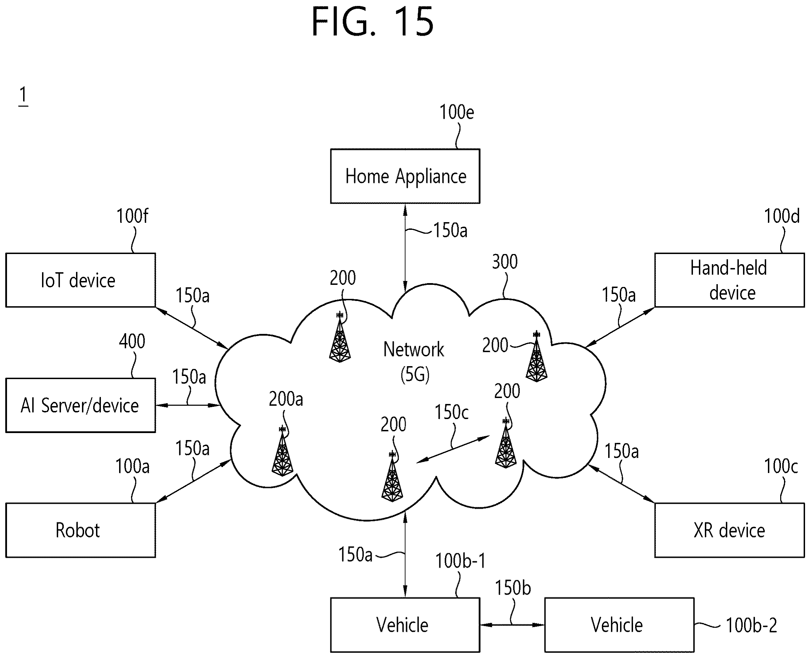

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

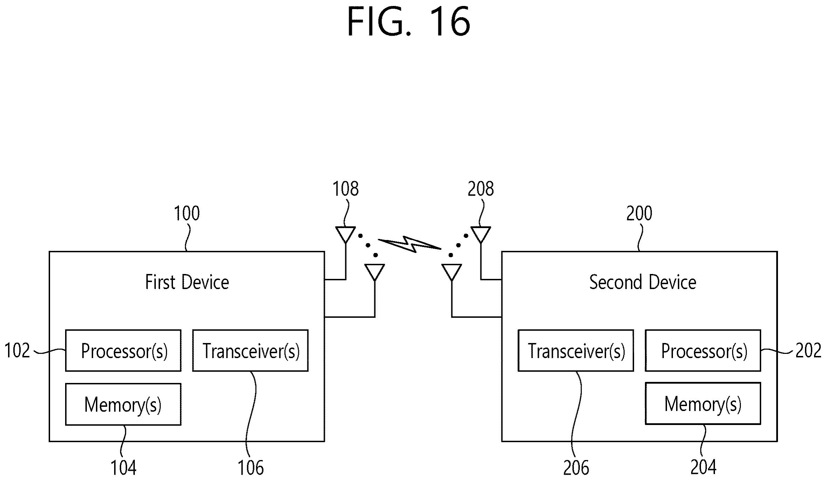

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

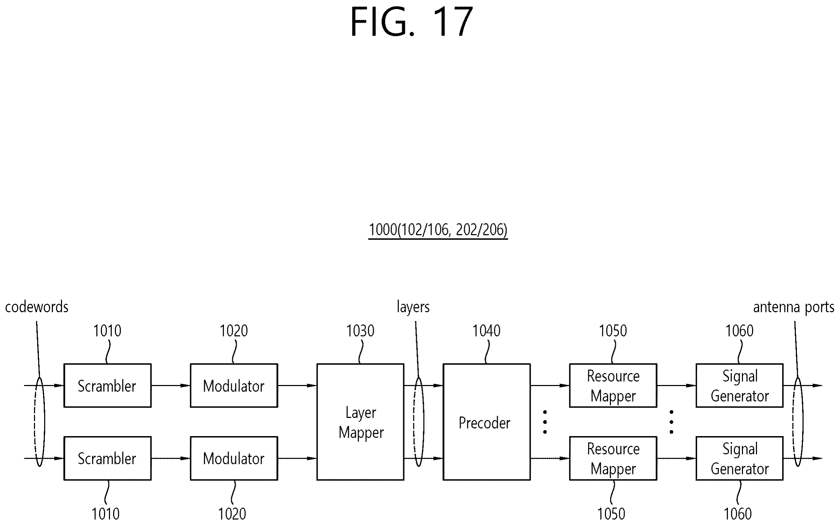

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

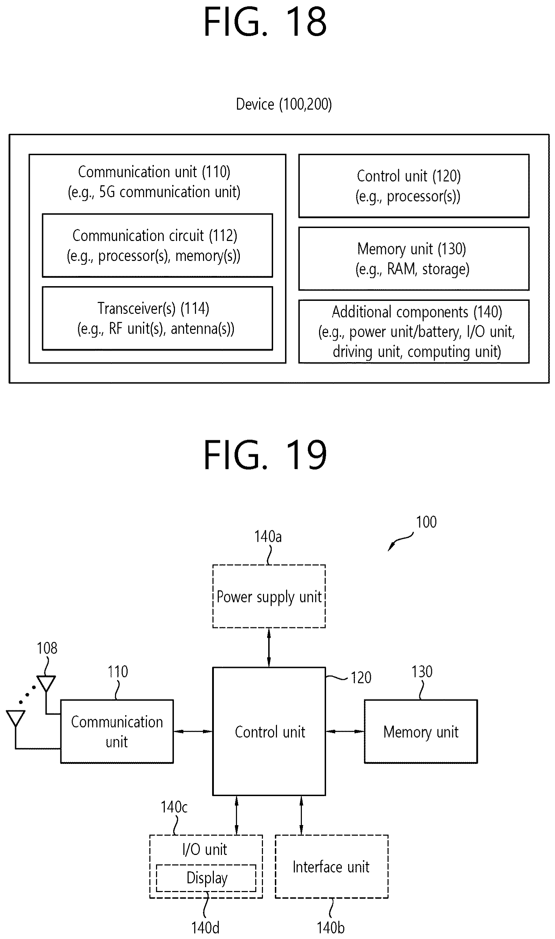

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

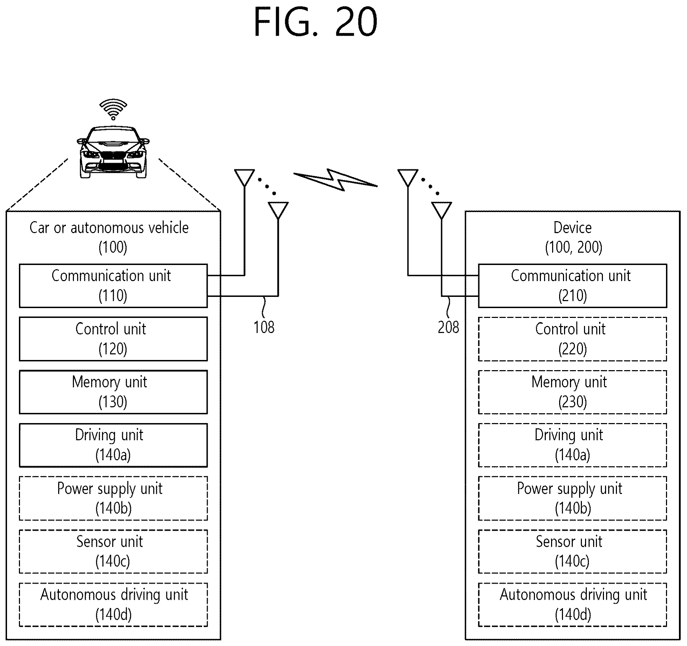

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining information related to a plurality of carriers; and
transmitting, to a second device, at least one of a PC5-S message or a PC5-radio resource control (RRC) message, based on at least one carrier mapped to a quality of service (QoS) flow among the plurality of carriers,
wherein information related to the at least one carrier mapped to the QoS flow is transferred from a higher layer of the first device to a lower layer of the first device.

2. The method of claim 1, wherein the at least one of the PC5-S message or the PC5-RRC message is transmitted based on the at least one carrier mapped to the QoS flow after a unicast link is established between the first device and the second device.

3. The method of claim 1, wherein the higher layer of the first device is a vehicle-to-everything (V2X) layer of the first device, and
wherein the lower layer of the first device is an access stratum (AS) layer of the first device.

4. The method of claim 3, wherein the lower layer of the first device is at least one of a radio resource control (RRC) layer of the first device or a medium access control (MAC) layer of the first device included in the AS layer of the first device.

5. The method of claim 1, wherein the QoS flow is related to a unicast service based on a unicast link established between the first device and the second device.

6. The method of claim 5, wherein the at least one carrier mapped to the QoS flow for transmission of the at least one of the PC5-S message or the PC5-RRC message is determined among the plurality of carriers mapped to the QoS flow related to the unicast service.

7. The method of claim 1, wherein the information related to the at least one carrier mapped to the QoS flow for transmission of the at least one of the PC5-S message or the PC5-RRC message is transferred, along with information included in the at least one of the PC5-S message or the PC5-RRC message, from the higher layer of the first device to the lower layer of the first device.

8. The method of claim 1, wherein the at least one carrier mapped to the QoS flow is determined among the plurality of carriers, based on the at least one of the PC5-S message or the PC5-RRC message not being mapped to the QoS flow.

9. The method of claim 1, wherein a carrier for transmission of signaling including the at least one of the PC5-S message or the PC5-RRC message not being mapped to the QoS flow among the plurality of carriers is configured by a base station.

10. The method of claim 1, wherein a carrier for transmission of signaling including the at least one of the PC5-S message or the PC5-RRC message not being mapped to the QoS flow among the plurality of carriers is pre-configured in the first device.

11. The method of claim 1, wherein the at least one of the PC5-S message or the PC5-RRC message is transmitted based on the at least one carrier mapped to the QoS flow, through a signaling radio bearer (SRB).

12. The method of claim 1, wherein the PC5-S message includes at least one of (i) a direct communication request (DCR) message, (ii) a direct communication accept (DCA) message or (iii) a message related to a security configuration of a unicast link established between the first device and the second device.

13. The method of claim 1, wherein the PC5-RRC message includes at least one of (i) a message including information related to a reconfiguration of a PC5-RRC connection or (ii) a message including information related to a capacity of the first device.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining information related to a plurality of carriers; and
transmitting, to a second device, at least one of a PC5-S message or a PC5-radio resource control (RRC) message, based on at least one carrier mapped to a quality of service (QoS) flow among the plurality of carriers,
wherein information related to the at least one carrier mapped to the QoS flow is transferred from a higher layer of the first device to a lower layer of the first device.

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining information related to a plurality of carriers; and
transmitting, to a second device, at least one of a PC5-S message or a PC5-radio resource control (RRC) message, based on at least one carrier mapped to a quality of service (QoS) flow among the plurality of carriers,
wherein information related to the at least one carrier mapped to the QoS flow is transferred from a higher layer of the first device to a lower layer of the first device.

16. A non-transitory computer-readable storage medium recording instructions, the instruction, when executed, cause a first device to perform operations comprising:
obtaining information related to a plurality of carriers; and
transmitting, to a second device, at least one of a PC5-S message or a PC5-radio resource control (RRC) message, based on at least one carrier mapped to a quality of service (QoS) flow among the plurality of carriers,
wherein information related to the at least one carrier mapped to the QoS flow is transferred from a higher layer of the first device to a lower layer of the first device.

17. A method for performing wireless communication by a second device, the method comprising:
establishing a unicast link with a first device; and
receiving, from the first device, at least one of a PC5-S message or a PC5-radio resource control (RRC) message, based on at least one carrier mapped to a quality of service (QoS) flow related to the unicast link,
wherein information related to the at least one carrier mapped to the QoS flow related to the unicast link is transferred from a higher layer of the first device to a lower layer of the first device.

18. A second device adapted to perform wireless communication, the second device comprising:
at least one transceiver;
at least one processor; and
at least one memory connected to the at least one processor and storing instructions that, based on being executed, cause the second device to perform operations comprising:
establishing a unicast link with a first device; and
receiving, from the first device, at least one of a PC5-S message or a PC5-radio resource control (RRC) message, based on at least one carrier mapped to a quality of service (QoS) flow related to the unicast link,
wherein information related to the at least one carrier mapped to the QoS flow related to the unicast link is transferred from a higher layer of the first device to a lower layer of the first device.

19. A processing device adapted to control a second device to perform wireless communication, the processing device comprising:
at least one processor; and
at least one memory connected to the at least one processor and storing instructions that, based on being executed, cause the at least one processor to perform operations comprising:
establishing a unicast link with a first device; and
receiving, from the first device, at least one of a PC5-S message or a PC5-radio resource control (RRC) message, based on at least one carrier mapped to a quality of service (QoS) flow related to the unicast link,
wherein information related to the at least one carrier mapped to the QoS flow related to the unicast link is transferred from a higher layer of the first device to a lower layer of the first device.

20. A non-transitory computer-readable storage medium recording instructions, the instruction, when executed, cause a second device to perform operations comprising:
establishing a unicast link with a first device; and
receiving, from the first device, at least one of a PC5-S message or a PC5-radio resource control (RRC) message, based on at least one carrier mapped to a quality of service (QoS) flow related to the unicast link,
wherein information related to the at least one carrier mapped to the QoS flow related to the unicast link is transferred from a higher layer of the first device to a lower layer of the first device.
